# FASCICULE DE BREVET EUROPEEN

(11) **EP 0 624 873 B1**
(45) Date de publication et mention de la délivrance du brevet: **04.03.1998**
(21) Numéro de dépôt: 94870076.0
(22) Date de dépôt: 04.05.1994
(51) Int. Cl.: G11B 17/04, G11B 15/17

(54) **Dispositif permettant le chargement correct de cassettes dans un logement d'introduction d'appareils de lecture et/ou d'enregistrement**
Verfahren zur Gestattung des fehlerfreien Laden von Kassetten in einen Einführungsraum eines Lese und/oder Schreibgeräts
System which allows the correct loading of cassettes in an input room of a reading and/or writing equipment

(30) Priorité: 12.05.1993 BE 9300491
(43) Date de publication de la demande: 17.11.1994
(73) Titulaire: STAAR SOCIETE ANONYME, B-1200 Bruxelles (BE)
(72) Inventeur: D'Alayer de Costemore d'Arc Stéphane, Marie A., B-1474 Ways (BE)
(74) Mandataire: Overath, Philippe

(56) Documents cités:
- EP-A- 0 392 595
- US-A- 4 546 396
- US-A- 5 022 023
- US-A- 5 063 554
- US-A- 5 151 835
- US-A- 5 164 935

## Description

La présente invention se rapporte aux dispositifs de chargement de cassettes, cartouches, boîtiers pour supports d'information tels que disques, bandes magnétiques,... et concerne plus particulièrement un dispositif interdisant ou entravant, dès le début du mouvement d'insertion, l'insertion d'une cassette, cartouche ou boîtier qui ne serait pas présenté dans la position correcte d'insertion.

De nombreux dispositifs sont connus pour éviter le chargement et/ou l'insertion d'une cassette ou cartouche mal présentée mais ils requièrent que ladite cartouche ou cassette soit insérée sur près ou plus de la moitié de sa longueur pour être opératifs et d'autre part, bien souvent ils ne sont opératifs que pour un seul sens d'insertion (latéral ou frontal). Par exemple, les documents japonais 50-34516 et 47-36088 montrent des dispositifs pour une Cassette Compacte détectant la surépaisseur que celle-ci possède sur le bord de l'une de ses faces. Cette détection n'a lieu qu'après insertion de la cassette sur près de 80% de la distance d'insertion. L'inconvénient de tels dispositifs est que l'utilisateur, après avoir inséré la cassette ou cartouche sur une telle longueur, est persuadé que celle-ci est correctement positionnée et s'applique donc à continuer le mouvement d'insertion en déployant plus de force avec le risque d'endommager le mécanisme de chargement.

Il existe des dispositifs pour éviter le chargement et/ou l'insertion d'une cassette ou cartouche mal présentée et qui requièrent que ladite cassette ou cartouche soit insérée selon un seul sens d'introduction (latérale ou frontale).

Ainsi le document US 5.164.935, servant de base au préambule de la revendication 1, décrit un dispositif destiné à recevoir normalement des cassettes de forme carrée telles que celles utilisées comme enveloppe de disques optiques CD-ROM.

Ce document décrit un système évitant l'insertion erronée d'une telle cassette grâce à une patte triangulaire déplacée latéralement par l'angle brisé d'un des coins avant d'une cassette correctement insérée.

Il n'y a donc qu'un seul élément pouvant coopérer avec la cassette, cet élément étant disposé latéralement par rapport à la fente d'introduction de la cassette.

Si les cassettes ne sont pas carrées mais sensiblement rectangulaires et introduites par leur petit côté alors la patte est inefficace et la cassette peut être insérée de façon erronée. De même une cassette de petite taille - inférieure à celles prévues pour le dispositif de chargement - peut être insérée sans toucher la patte latérale ce qui est dommageable pour l'appareil qui n'est pas prévu pour des cassettes plus petites .

Si d'autre part, la taille de la patte ou son déplacement est augmenté pour pallier à la différence de longueur entre le grand et le petit côté de cassettes rectangulaires, alors la patte doit effectuer un déplacement très important ce qui augmente la largeur des dispositifs de chargement, donc leur encombrement ainsi que celui de l'appareil, et complique le mécanisme de chargement.

D'autres dispositifs, tels que ceux proposés par les documents EP 0 392 595 et US 5.151.835, ne sont opératifs que pour une insertion frontale de la cassettes (par son grand côté) ou pour des cassettes de forme carrée, car elles autorisent sans aucun problème l'insertion d'une cassette présentée latéralement, c'est-à-dire par son petit côté en cas de cassettes de forme rectangulaire, avec le risque de voir le mécanisme et/ou l'appareil endommagés.

Le but de la présente invention est donc de remédier aux inconvénients précités en proposant des moyens simples, efficaces, économiques et fiables pour assurer que ledit mouvement d'introduction ou d'insertion soit immédiatement entravé si une cassette ou cartouche de forme carrée ou rectangulaire n'est pas présentée par l'utilisateur dans la position requise.

Un second but de l'invention est de faire en sorte que cette détection se fasse dès le début du mouvement d'insertion de la cassette ou cartouche.

Un troisième but de l'invention est d'assurer que le dispositif entravant le mouvement d'introduction soit toujours efficace, que la cassette ou la cartouche soit insérée latéralement (par le petit côté) ou longitudinalement (par le grand côté) de façon à assurer une sécurité permanente et totale.

En vue de la réalisation de ces buts, le dispositif objet de l'invention est essentiellement caractérisé par le contenu de la revendication principale.

D'autres avantages et particularités ressortiront de la description, donnée ci-après, d'un mode de réalisation de l'invention auquel des modifications peuvent être apportées sans pour autant sortir du cadre de l'invention et dans laquelle :
- la figure 1 est une vue de dessus simplifiée d'un mécanisme de chargement incorporant l'invention, en l'absence de cassette ou cartouche dans ledit mécanisme,
- la figure 2 est une vue de face selon la figure 1,
- les figures 3 et 4 sont semblables aux figures 1 et 2, une cartouche appropriée ayant été insérée correctement et amenée en position opérative,
- les figures 5a, b, et c représentent respectivement et sommairement les vues de dessus, de face et latérale d'une cartouche destinée à être insérée dans le mécanisme montré aux figures 1 à 4,
- la figure 6 est une vue en perspective d'un des éléments essentiels du dispositif objet de l'invention,
- les figures 7 et 8 représentent schématiquement le dispositif selon l'invention, entravant l'insertion d'une cartouche telle que montrée aux figures 5a, b et c mais mal présentée par l'utilisateur,
- la figure 7a est un détail de la figure 7 à plus grande échelle.

Pour faciliter la description et éviter de surcharger les figures, on n'a représenté sur celles-ci que les éléments essentiels à la compréhension de l'invention,

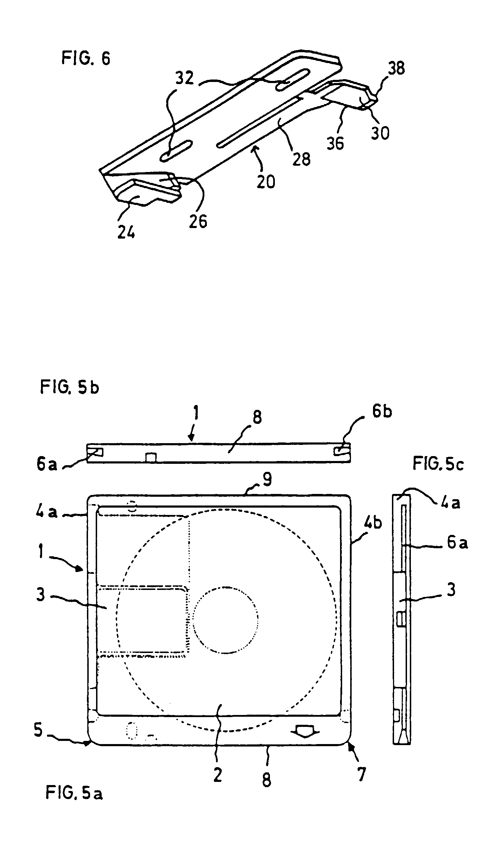

Comme le montrent les figures 5a, b et c, la cartouche 1 utilisée pour le mode de réalisation ici décrit est celle d'un "Mini Disque" à savoir un boîtier sensiblement parallélépipédique (72x67x5 mms) contenant un disque 2 d'environ 64 mms de diamètre et muni d'un volet 3 coulissant pour donner accès à la surface du disque lorsque la cartouche est en position opérative. La face 8 dite "avant" de la cartouche 1 a ses deux coins 5 et 7 légèrement arrondis tandis que les deux faces latérales 4a et 4b sont munies chacune d'une gorge 6a et 6b, décentrée par rapport au plan de symétrie de ces faces et pratiquée sur presque toute la longueur de chaque face latérale mais pas sur la totalité (voir figure 5c). Une patte est prévue dans tous les appareils acceptant cette cartouche 1, de telle sorte à pénétrer dans la gorge 6a et à ouvrir le volet 3 mais seulement en fin de course d'insertion de la cartouche 1 afin d'éviter tout contact physique avec la surface du disque aussi longtemps que celui-ci n'est pas à l'intérieur de l'appareil d'enregistrement et/ou de reproduction.

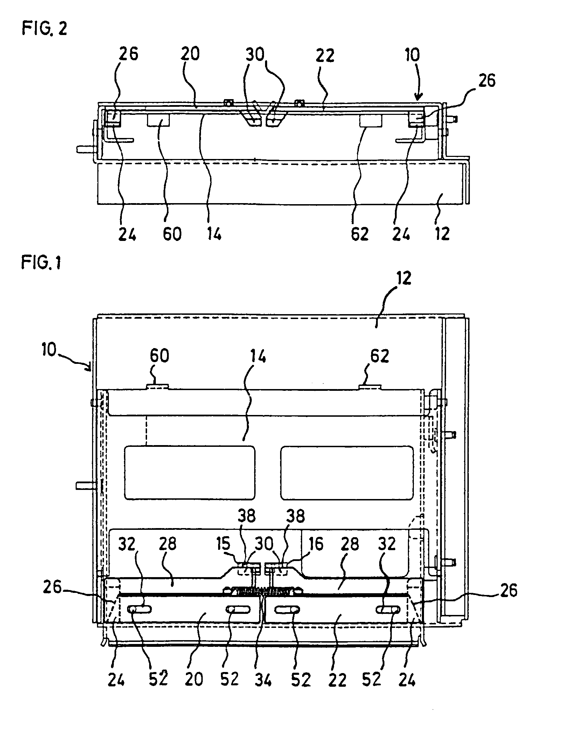

Comme le montre schématiquement la figure 1, un mécanisme de chargement 10 pour une cartouche et notamment celle représentée aux figures 5a, b et c, comprend principalement un châssis 12, un logement 14 destiné à recevoir la cartouche 1 et des moyens pour déplacer ledit logement et la cartouche qu'il contient entre sa position d'insertion ou d'éjection et sa position opérative. Ce mécanisme de chargement 10 est couvert par le brevet belge N° 891.045 de la demanderesse auquel on se reportera avantageusement pour toute information complémentaire quant à la construction et au fonctionnement dudit dispositif.

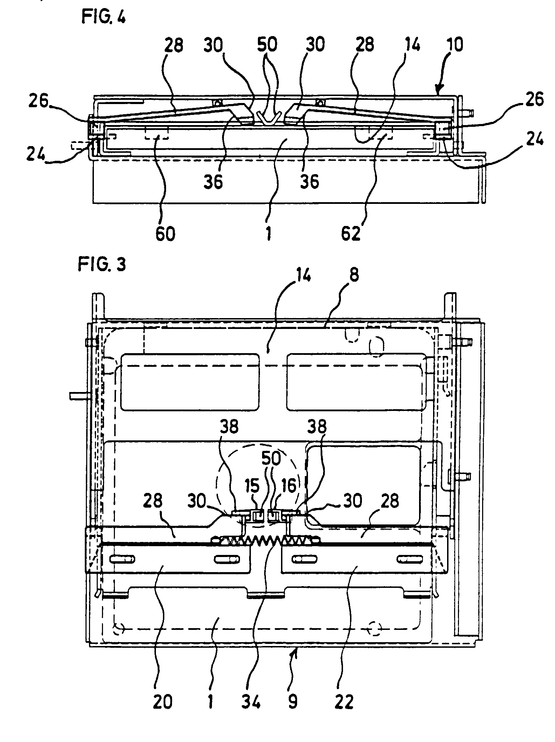

Le logement 14 comprend sur sa partie avant, c'est-à-dire celle par laquelle la cartouche 1 est insérée, deux éléments 20, 22 semblables (figure 1), à savoir un gauche et un droit qui sont déplaçables latéralement entre une position où ils interdisent l'introduction d'une cartouche 1 (figure 1) mal présentée et une position où ils sont inactifs et permettent le chargement d'une cartouche 1 correctement présentée par l'utilisateur (figure 3).

Ainsi que représenté à la figure 6, chaque élément 20, 22 comprend une languette 24 destinée à coopérer avec la gorge 6a, 6b correspondante ; une surface 26 coopérant avec le coin arrondi de la cartouche 1 et une patte 30 destinée à coopérer avec la périphérie de la cartouche 1 et montée sur une languette flexible 28. Chaque élément 20, 22 est monté en translation sur le logement 14 grâce à la combinaison de tétons 52 sur ledit logement et de fentes 32 pratiquées dans ledit élément 20, 22.

Un ressort de rappel 34 relie les deux éléments 20, 22 de façon à les maintenir à proximité l'un de l'autre (figures 1, 3).

Le logement 14 comprend deux ouvertures 15, 16 (figures 1 et 3) au travers desquelles passent les pattes 30, ces pattes étant dimensionnées de telle sorte qu'elles interdisent l'introduction d'une cartouche 1 lorsque les éléments 20, 22 sont dans la position représentée aux figures 1 et 2.

Le logement 14 comprend deux pattes postérieures 60, 62 servant de fin de course pour le mouvement d'insertion de la cartouche.

Lorsqu'une cartouche 1 est insérée correctement dans le logement 14 du dispositif de chargement 10, c'est-à-dire avec la face 8 en avant, les languettes 24 des éléments 20, 22 pénètrent dans les gorges 6a et 6b et permettent donc l'insertion de la cartouche 1.

Simultanément, la surface 26, inclinée par rapport au bord latéral de l'élément 20, 22 correspondant, coopère avec les coins arrondis 5, 7 de la cartouche 1, ce qui a pour effet de déplacer lesdits éléments 20, 22 latéralement à l'encontre du ressort de rappel 34 (figure 3). En s'écartant ainsi, les éléments 20 et 22 voient leur patte 30 s'effacer (figures 3 et 4) par coopération de leur arête inclinée 36 avec le bord de l'ouverture 15, 16 et grâce au fait que la languette 28 soit flexible.

Comme montré aux figures 3 et 4, le logement 14 peut alors recevoir la cartouche 1 et assurer non seulement son insertion complète mais également son transfert en position opérative.

Dans le cas où l'utilisateur cherche à insérer la cartouche 1 de façon inversée, c'est-à-dire avec **l**a face supérieure mise en-dessous, puisque les gorges latérales 6a et 6b sont dissymétriques, les languettes 24 interdisent toute insertion de la cartouche.

Si l'utilisateur cherche à insérer la cartouche 1 à l'envers, c'est-à-dire par la face arrière 9, étant donné que les gorges 6a et 6b n'existent pas, les languettes 24 interdisent toute introduction de la cartouche 1.

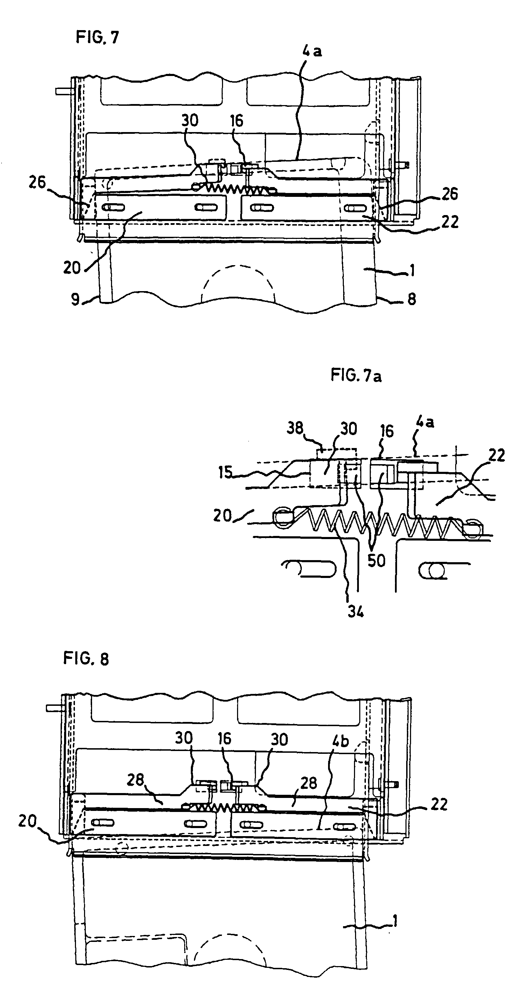

Si l'utilisateur cherche à insérer la cartouche 1 par l'une de ses faces latérales 4a ou 4b (figure 7), la largeur et la position relative des languettes 24 sont, de préférence, telles que l'espace entre les languettes est sensiblement inférieur à la longueur de la face latérale 4a, 4b et donc, même si un des éléments mobiles 20, 22 était déplacé (par exemple l'élément 22 à la figure 7) parce que l'utilisateur présente la cartouche 1 en biais comme montré à la figure 7, l'autre élément (le 20 à la figure 7) n'est pas déplacé et par conséquent sa patte 30 reste immobile et interdit toujours l'insertion de la cartouche 1.

Pour le cas où l'utilisateur s'efforcerait de déplacer un des éléments 20, 22 en présentant la cartouche 1 en biais, il est avantageux de prévoir un rebord 38, à l'arrière de la patte 30 (figure 6) et coopérant avec la périphérie des ouvertures 15, 16 (figure 7a)de façon à éviter toute remontée d'une patte 30 aussi longtemps que l'élément correspondant 20, 22 n'a pas effectué le déplacement latéral requis. En effet, l'action du bord 4a de la cartouche 1, présentée en biais sur l'arête inclinée 36, fait plier vers l'arrière la languette flexible 28 et le rebord 38 se positionne derrière l'ouverture 15 (ou 16) évitant tout déplacement vertical de la patte 30 (figure 7a).

Si l'utilisateur cherche à insérer la cartouche 1 à l'envers ou après inversion mais en la présentant en biais de façon à commander le déplacement latéral d'un des éléments mobiles 20, 22 (figure 8, élément 22), la largeur des languettes 24 et la position des pattes 30 sont telles que l'autre élément 22, 20 reste immobile (figure 8, élément 20) et interdit donc toute insertion de la cartouche 1.

Comme on le constate aisément, le dispositif objet de l'invention entrave immédiatement toute insertion d'une cartouche présentée de façon incorrecte par l'utilisateur, et ce, dès le début du mouvement d'insertion. Ainsi, l'utilisateur est immédiatement averti et donc vérifie le sens d'insertion de la cartouche 1 en évitant de poursuivre ou forcer le mouvement d'insertion, ce qui sauvegarde non seulement la mécanique de chargement mais aussi la cartouche.

Afin d'assurer une sécurité totale, le logement 14 présente à proximité des ouvertures 15, 16 un léger pli 50 (figures 3, 4, 7a) coopérant avec les pattes 30 de façon à éviter tout déplacement vertical de celles-ci aussi longtemps que les éléments 20, 22 correspondants n'ont pas effectué le déplacement latéral requis. Cela évite notamment qu'un utilisateur puisse insérer une cartouche 1 mal présentée mais suffisamment inclinée vers le bas pour qu'une de ses arêtes vienne agir sur la partie inférieure des pattes 30 et provoquer leur remontée.

A titre d'exemple, dans un mode de réalisation préféré de l'invention, la distance entre les languettes 24 est de 65 mms ; celle entre les pattes 30 est de 2 mms et la différence de niveau entre lesdites pattes et lesdites languettes est de 5 mms. D'autre part, les pattes 30 qui ont une largeur de 5 mms se situent à 15 mms de l'arête frontale du logement 14.

## Revendications

1. Dispositif de chargement (10) de cassettes (1) comportant un logement (14) recevant ladite cassette, muni d'au moins un élément mobile (20,22) déplaçable latéralement par rapport au logement (14) et comprenant une surface inclinée (26) coopérant avec la face avant d'une cassette (1) introduite dans le logement, la surface inclinée (26) étant disposé latéralement et à proximité de la face d'introduction du logement (14), caractérisé en ce que l'élément mobile (20, 22) est associée à au moins une patte mobile (30) entravant l'insertion d'une cassette (1) mal présentée et déplaçable dans un plan perpendiculaire à celui du déplacement de l'élément mobile (20, 22) de façon à permettre le chargement d'une cassette (1) au travers de la face d'introduction du logement (14) uniquement lorsque la surface inclinée (26) a été déplacée latéralement par une cassette (1) correctement présentée.

2. Dispositif selon la revendication 1, caractérisé en ce que la patte (30) est muni d'une arête inclinée (36) coopérant avec le bord d'une ouverture (15, 16) pratiquée dans le logement (14) et au travers de laquelle passe la patte (30) de façon à ce que, lors d'un déplacement latérale de l'élément mobile (20, 22), l'arête (36) en coopérant avec le bord de l'ouverture (15, 16) déplace la patte (30) dans un plan perpendiculaire à celui du déplacement de l'élément mobile (20, 22).

3. Dispositif selon la revendication 2, caractérisé en ce que la patte (30) comprend un rebord (38) coopérant avec la périphérie de l'ouverture (15, 16) pour empêcher tout déplacement de la patte (30) aussi longtemps que la surface (26) de l'élément mobile (20,22) n'a pas effectué de déplacement latéral.

4. Dispositif selon la revendication 2, caractérisé en ce que le logement (14) présente, à proximité de l'ouverture (15, 16) un pli (50) coopérant avec la patte (30) pour empêcher tout déplacement de la patte (30) aussi longtemps que l'élément mobile (20,22) n'a pas effectué un déplacement latéral.

5. Dispositif selon l'une quelconque des revendications précédentes, caractérisé en ce que la surface (26) est inclinée dans le sens d'introduction de la cassette (1) dans le logement (14) pour être déplacée latéralement par un coin de la cassette (1) dans le plan d'insertion de la cassette (1) tandis que la patte (30) se déplace dans un plan perpendiculaire à celui-ci.

6. Dispositif selon la revendication 1, caractérisé en ce que la patte (30) est reliée à l'élément mobile (20, 22) par l'intermédiaire d'une languette flexible (28).

7. Dispositif selon l'une quelconque des revendications précédentes caractérisé en ce que l'élément mobile (20, 22) est muni, à proximité de la surface inclinée (26), d'une languette (24) coopérant avec une gorge (6) normalement prévue dans la face latérale (4a, 4b) d'une cassette (1).

8. Dispositif selon la revendication 7, caractérisé en ce que la languette (24) agit comme organe d'arrêt lorsque la cassette (1) n'est pas introduite dans le bon sens.

9. Dispositif selon l'une quelconque des revendications précédentes caractérisé en ce qu'il comporte deux éléments mobiles (20,22) semblables, disposés symétriquement sur chaque côté du logement (14) dans le sens d'introduction d'une cassette (1).

10. Dispositif selon l'une quelconque des revendications précédentes, caractérisé en ce que les dimensions de l'organe d'arrêt (24) et la patte (30) ainsi que leurs espacement par rapport à la face d'introduction du logement (14) interdit toute insertion d'une cassette (1) présentée par son petit côté lorsque l'insertion correcte se fait par le grand côté en cas de cassettes de forme rectangulaire.

## Patentansprüche

1. Vorrichtung (10) zum Laden von Kassetten (1) mit einer die Kassette aufnehmenden Aufnahme (14), welche wenigstens ein bewegbares Element (20, 22) aufweist, das gegenüber der Aufnahme (14) seitlich verlagerbar ist und eine geneigte Fläche (26) umfaßt, die mit der Vorderseite einer in die Aufnahme eingeführten Kassette (1) zusammenwirkt, wobei die geneigte Fläche (26) seitlich und nahe der Einführseite der Aufnahme (14) angeordnet ist, dadurch gekennzeichnet, daß
dem bewegbaren Element (20, 22) wenigstens eine bewegbare Klaue (30) zugeordnet ist, welche das Einführen einer unkorrekt dargebotenen Kassette (1) behindert und in einer Ebene, die zu der der Verlagerung des bewegbaren Elements (20, 22) senkrechten ist, derart verlagerbar ist, daß das Laden einer Kassette (1) über die Einführseite der Aufnahme (14) nur erlaubt ist, wenn die geneigte Fläche (26) durch eine korrekt dargebotene Kassette (1) seitlich verlagert wurde.

2. Vorrichtung nach Anspruch 1, dadurch gekennzeichnet, daß die Klaue (30) eine geneigte Kante (36) aufweist, welche mit dem Rand einer in der Aufnahme (14) angebrachten Öffnung (15, 16) zusammenwirkt und durch welche die Klaue (30) derart hindurchtritt, daß bei einer seitlichen Verlagerung des bewegbaren Elements (20, 22) die Kante (36) in Zusammenwirkung mit dem Rand der Öffnung (15, 16) die Klaue (30) in einer Ebene verlagert, die senkrecht zu der der Verlagerung des bewegbaren Elements (20, 22) ist.

3. Vorrichtung nach Anspruch 2, dadurch gekennzeichnet, daß die Klaue (30) einen Vorsprung (38) umfaßt, der mit dem Umfang der Öffnung (15, 16) zusammenwirkt, um jede Verlagerung der Klaue (30) so lange zu verhindern, wie die Fläche (26) des bewegbaren Elements (20, 22) die seitliche Verlagerung nicht ausgeführt hat.

4. Vorrichtung nach Anspruch 2, dadurch gekennzeichnet, daß die Aufnahme (14) in der Nähe der Öffnung (15, 16) einen Knick (50) aufweist, der mit der Klaue (30) zusammenwirkt, um jede Verlagerung der Klaue (30) so lange zu verhindern, wie die Fläche (26) des bewegbaren Elements (20, 22) eine seitliche Verlagerung nicht ausgeführt hat.

5. Vorrichtung nach einem der vorangehenden Ansprüche, dadurch gekennzeichnet, daß die Fläche (26) in Richtung des Einführens der Kassette (1) in die Aufnahme (14) geneigt ist, um durch eine Ecke der Kassette (1) in der Einführebene der Kassette (1) seitlich verlagert zu werden, während die Klaue (30) sich in einer hierzu senkrechten Ebene verlagert.

6. Vorrichtung nach Anspruch 1, dadurch gekennzeichnet, daß die Klaue (30) mit dem bewegbaren Element (20, 22) mittels einer flexibelen Zunge (28) verbunden ist.

7. Vorrichtung nach einem der vorangehenden Ansprüche, dadurch gekennzeichnet, daß das bewegbare Element (20, 22), nahe der geneigten Fläche (26), eine Zunge (24) aufweist, die mit einer in der Seitenfläche (4a, 4b) einer Kassette (1) normalerweise vorgesehenen Vertiefung (6) zusammenwirkt.

8. Vorrichtung nach Anspruch 7, dadurch gekennzeichnet, daß die Zunge (24) als Sperrorgan wirkt, wenn die Kassette (1) nicht in der richtigen Richtung eingeführt wird.

9. Vorrichtung nach einem der vorangehenden Ansprüche, dadurch gekennzeichnet, daß sie zwei ähnliche bewegbare Elemente (20, 22) umfaßt, welche in der Richtung des Einführens einer Kassette (1) symmetrisch auf jeder Seite der Aufnahme (14) angeordnet sind.

10. Vorrichtung nach einem der vorangehenden Ansprüche, dadurch gekennzeichnet, daß die Abmessungen des Sperrorgans (24) und der Klaue (30) sowie ihr Abstand zu der Einführseite der Aufnaheme (14) jegliches Einführen einer Kassete (1) verbieten, die mit ihrer kurzen Seite dargeboten wird, wenn das korrekte Einführen im Falle von Kassetten von rechteckiger Gestalt über die lange Seite stattfindet.

## Claims

1. Loading device (10) for cassettes (1) having a housing (14) for receiving said cassette, bearing at least one mobile element (20, 22) movable laterally with respect to the housing (14) and having an inclined surface (26) cooperating with the front edge of a cassette (1) inserted in the housing, the inclined surface (26) being arranged laterally and in the vicinity of the insertion face of the housing (14), characterized in that the mobile element (20, 22) is associated with at least one mobile leg (30) impeding the insertion of a non-properly oriented cassette (1) and movable in a plane perpendicular to the shifting plane of the mobile element (20, 22) so as to permit loading of a cassette (1) through the insertion face of the housing (14) only when the inclined surface (26) has been displaced laterally by a properly oriented cassette (1).

2. Device according to claim 1, characterized in that the leg (30) comprises an inclined edge (36) cooperating with the side of an opening (15, 16) made in the housing (14) and through which runs the leg (30) so that, upon lateral displacement of the mobile element (20, 22), the inclined edge (36) cooperating with the side of the opening (15, 16) displaces the leg (30) in a plane perpendicular to the shifting plane of the mobile element (20, 22).

3. Device according to claim 2, characterized in that the leg (30) includes a tongue (38) cooperating with the periphery of the opening (15, 16) to prevent any displacement of the leg (30) as long as the surface (26) of the mobile element (20, 22) has not been displaced laterally.

4. Device according to claim 2, characterized in that the housing (14) has, in the vicinity of the opening (15, 16), a bend (50) cooperating with the leg (30) to prevent any displacement of the leg (30) as long as the mobile element (20, 22) has not been displaced laterally.

5. Device according to any of the preceding claims, characterized in that the surface (26) is inclined in the direction of insertion of the cassette (1) in the housing (14) for being displaced laterally by a corner of the cassette (1) in the plane of insertion of the cassette while the leg (30) moves in a plane perpendicular to it.

6. Device according to claim 1, characterized in that the leg (30) is linked to the mobile element (20, 22) through a flexible tongue (28).

7. Device according to any of the preceding claims, characterized in that the mobile element (20, 22) bears, in the vicinity of the inclined surface (26), a tongue (24) cooperating with a groove (6) normally located in the lateral edge (4a, 4b) of a cassette (1).

8. Device according to claim 7, characterized in that the tongue (24) serves as a blocking element when the cassette (1) is not inserted with the proper orientation.

9. Device according to any of the preceding claims, characterized in that it includes two similar mobile elements (20, 22), arranged symmetrically on each side of the housing (14) in the direction of insertion of a cassette (1).

10. Device according to any of the preceding claims, characterized in that the dimensions of the blocking tongue (24) and the leg (30) as their spacing with respect to the insertion face of the housing (14) prevents any insertion of a cassette inserted with its small edge first when the proper orientation for insertion is along the large edge for cassettes of rectangular shape.
